# FASCICULE DE BREVET EUROPEEN

(11) **EP 3 598 801 B1**
(45) Date de publication et mention de la délivrance du brevet: **28.08.2024**
(21) Numéro de dépôt: 19186233.3
(22) Date de dépôt: 15.07.2019
(51) Int. Cl.: H04Q 9/00, H04W 52/02

(54) **DISPOSITIF PERMETTANT DE TRANSPORTER DES TRAMES LORA SUR UN RÉSEAU CPL**
VERFAHREN ZUM TRANSPORTIEREN VON LORA FRAMES IN EIN CPL-NETZWERK
DEVICE FOR TRANSMITTING LORA FRAMES OVER A PLC NETWORK

(30) Priorité: 18.07.2018 FR 1856654
(43) Date de publication de la demande: 22.01.2020
(73) Titulaire: Sagemcom Energy & Telecom SAS, 92270 Bois-Colombes (FR)
(72) Inventeur: TEBOULLE, Henri, 92500 RUEIL MALMAISON (FR); LE GOURRIEREC, Marc, 92500 RUEIL MALMAISON (FR); HARNAY, Franck, 92500 RUEIL MALMAISON (FR)
(74) Mandataire: Cabinet Le Guen Maillet

(56) Documents cités:
- EP-A1- 3 122 061
- WO-A1-2018/077790
- WO-A1-2018/119235
- CN-A- 107 547 521
- NOR RUHAIZAN FAZRREN ASHRAFF MOHD ET AL: "Smart traffic light for congestion monitoring using LoRaWAN", 2017 IEEE 8TH CONTROL AND SYSTEM GRADUATE RESEARCH COLLOQUIUM (ICSGRC), IEEE, 4 August 2017 (2017-08-04), pages 132 - 137, XP033227254, DOI: 10.1109/ICSGRC.2017.8070582
- LI YUEZHONG ET AL: "Research on water meter reading system based on LoRa communication", 2017 IEEE INTERNATIONAL CONFERENCE ON SMART GRID AND SMART CITIES (ICSGSC), IEEE, 23 July 2017 (2017-07-23), pages 248 - 251, XP033153646, DOI: 10.1109/ICSGSC.2017.8038585

## Description

La présente invention concerne un dispositif et un procédé permettant de faire transporter des trames émises par un terminal sur un réseau sans fil à grande portée et à faible consommation d'énergie par un réseau de communication par courants porteurs en ligne d'un système de gestion automatique de relevés de compteurs électriques.

Avec l'apparition récente de l'internet des objets (« Internet of Things (IoT) » en terminologie anglo-saxonne) est apparu un nouveau type de réseaux : les réseaux sans fil à grande portée et à faible consommation d'énergie (« Low Power Wide Area Network (LPWAN) », en terminologie anglo-saxonne). Parmi ces réseaux LPWAN, on peut citer des réseaux basés sur la technologie LoRa (marque déposée) (« Long Range» en terminologie anglo-saxonne) et les réseaux de la société Sigfox.

Un réseau basé sur la technologie LoRa (appelé « réseau LoRa » par la suite) utilise un protocole appelé LoRaWAN. Un réseau LoRa est composé de stations de base ou passerelles (« gateways » en terminologie anglo-saxonne) généralement placées sur des points hauts afin de couvrir une grande zone géographique. Les passerelles, appelées *passerelles LoRa* par la suite, sont aptes à détecter des messages émis dans leur zone par des équipements ou terminaux (« endpoints » en terminologie anglo-saxonne) et à les remonter vers au moins un serveur (« LoRa Network Server (LNS) » en terminologie anglo-saxonne), appelé serveur LNS par la suite, qui les traitera.

Dans un fonctionnement classique d'un réseau LoRa, un terminal désirant transmettre un message (*i.e.* des données) au serveur LNS, transmet ce message dans une trame, dite *trame LoRa montante*, conforme au protocole LoRaWAN. La trame LoRa montante est transmise en mode multidiffusion (« broadcast » en terminologie anglo-saxonne). Cette trame LoRa montante est reçue par au moins une passerelle LoRa. Chaque passerelle LoRa ayant reçu la trame LoRa montante la décode et retransmet le message au serveur dans une requête HTTP (protocole de transfert hypertext, « HyperText Transfer Protocol » en terminologie anglo-saxonne). Si plusieurs passerelles LoRa ont reçu la trame LoRa montante, le serveur reçoit plusieurs requêtes HTTP contenant le message. Le serveur doit alors désigner parmi les passerelles LoRa ayant reçu la trame LoRa montante, la passerelle LoRa à utiliser pour relayer une réponse au message contenu dans la trame LoRa montante. La réponse est transmise du serveur à la passerelle LoRa désignée dans une requête HTTP, puis en point à point, de la passerelle LoRa désignée au terminal dans une trame LoRa descendante conforme au protocole LoRaWAN.

Bien que les réseaux LPWAN se répandent de plus en plus, il existe des zones hors de portée de ces réseaux. Ces zones n'ont alors pas accès à l'internet des objets.

D'autres réseaux offrent une couverture beaucoup plus fine des territoires, notamment dans les pays développés. On peut notamment penser aux réseaux électriques. Les réseaux électriques, qui à la base étaient destinés exclusivement au transport d'électricité, ont évolué dernièrement pour devenir des réseaux dans lesquels des données peuvent circuler. Les réseaux de communication par courants porteurs en ligne (« PowerLine Communications » en terminologie anglo-saxonne) pour des systèmes de type AMM (gestion automatique de relevés de compteurs, « Automated Meter Management » en terminologie anglo-saxonne) utilisent ainsi des infrastructures des réseaux électriques pour créer un réseau, dit réseau logique. Parmi ces réseaux logiques, dits réseaux CPL (Courants Porteurs en Ligne), on peut citer les réseaux conformes aux spécifications PRIME (« PoweRline Intelligent Metering Evolution » en terminologie anglo-saxonne) ou les réseaux conformes au standard G3-PLC spécifié dans la recommandation ITU-T G.9903. Dans les réseaux CPL, des communications sont établies entre des compteurs électriques, dits intelligents (« smart electrical meters » en terminologie anglo-saxonne), et un dispositif appelé *concentrateur de données* (« data concentrator » en terminologie anglo-saxonne) pour permettre notamment une relève automatisée à distance de mesures de consommation électrique effectuées par lesdits compteurs électriques intelligents. Par la suite nous appelons simplement *compteur* chaque compteur électrique intelligent. Une pluralité de concentrateurs de données est typiquement géographiquement déployée dans un réseau CPL de manière à répartir la charge de gestion à distance d'une multitude de compteurs. Chaque concentrateur de données est lui-même connecté à une même unité centralisée permettant la gestion du système de type AMM qui est gérée par un opérateur du réseau d'alimentation électrique auquel lesdits compteurs sont connectés.

Comme l'indique l'acronyme AMM, les réseaux CPL, pour les systèmes de type AMM, sont destinés à transporter des données de métrologie émanant de compteurs. Rien n'est prévu, ni en termes matériels, ni en termes protocolaires, pour transporter autre chose que des données de métrologie provenant de compteurs. Les réseaux électriques, qui, contrairement aux réseaux LPWAN, couvrent finement les territoires, ne peuvent donc, à l'heure actuelle, être utilisés pour transporter des données provenant d'objets connectés dans des zones non couvertes par les réseaux LPWAN.

Il est souhaitable de pallier ces inconvénients de l'état de la technique. Il est notamment souhaitable de proposer un procédé et un dispositif permettant de bénéficier de la couverture d'un réseau CPL pour les systèmes de type AMM pour acheminer vers un serveur LNS des données en provenance d'objets connectés qui seraient hors de portée d'un réseau LPWAN. Le procédé et le dispositif doivent préférentiellement assurer une rétrocompatibilité avec les systèmes existant et notamment avec des serveurs LNS existants. Les données de métrologie étant prioritaires sur les réseaux CPL pour les systèmes de type AMM, le procédé proposé doit, par ailleurs, assurer que le transport de données provenant d'objets connectés n'affecte pas le transport des données de métrologie.

Les documents EP3122061 et NOR RUHAIZAN FAZRREN ASHRAFF MOHD ET AL : « Smart traffic liglit for congestion monitoring using LoRaWan", 2017 IEEE 8TH CONTROL AND SYSTEM GRADUATE RESEARCH COLLOQUIUM (ICSGRC), IEEE, 4 août 2017 décrivent des systèmes du reseau LPWAN.

Il est de plus souhaitable de fournir une solution qui soit simple à mettre en oeuvre et à faible coût.

Selon un premier aspect de l'invention, l'invention concerne un système de communication comprenant un terminal et un serveur, ledit terminal étant adapté pour échanger des trames LPWAN avec au moins une passerelle, dite passerelle LPWAN, par l'intermédiaire d'un premier réseau sans fil à grande portée et à faible consommation d'énergie, et le serveur étant adapté pour échanger des trames LPWAN avec des passerelles LPWAN, chaque trame échangée entre le terminal et le serveur devant transiter par un compteur et un concentrateur de données compris dans un deuxième réseau de communication par courants porteurs en ligne d'un système de gestion automatique de relevés d'une pluralité de compteurs électriques, dits compteurs, lesdits compteurs de la pluralité de compteurs étant rattachés à au moins un concentrateur de données via le deuxième réseau, au moins un compteur de la pluralité implémentant une passerelle LPWAN et comportant une interface de communication lui permettant d'échanger des trames LPWAN avec ledit terminal par l'intermédiaire du premier réseau. Le système comprend un dispositif selon le premier aspect.

Selon un deuxième aspect de l'invention, l'invention concerne un procédé permettant d'échanger des premières trames, dites trames LPWAN, entre un terminal et un serveur, ledit terminal étant adapté pour échanger des trames LPWAN avec au moins une passerelle, dite passerelle LPWAN, par l'intermédiaire d'un premier réseau sans fil à grande portée et à faible consommation d'énergie, et le serveur étant adapté pour échanger des trames LPWAN avec des passerelles LPWAN, chaque trame LPWAN échangée entre le terminal et le serveur devant transiter par au moins un compteur et un concentrateur de données reliés entre eux par un deuxième réseau de communication par courants porteurs en ligne et formant un système de gestion automatique de relevés d'une pluralité de compteurs électriques, au moins un compteur implémente une passerelle LPWAN et comporte une interface de communication lui permettant d'échanger des trames LPWAN avec ledit terminal par l'intermédiaire du premier réseau. Le procédé est exécuté par un dispositif intermédiaire relié à chaque concentrateur de données par l'intermédiaire d'un troisième réseau et au serveur par l'intermédiaire d'un quatrième réseau de sorte que chaque trame LPWAN échangée entre ledit terminal et le serveur transite par le dispositif intermédiaire, chaque trame LPWAN échangée entre le dispositif intermédiaire et le serveur étant encapsulée dans une deuxième trame conforme à un format de trames que le serveur échangerait avec une passerelle LPWAN, et comprend : recevoir (415) une ou plusieurs copies d'une même trame LPWAN émise par le terminal de la part d'une pluralité de concentrateur de données, la trame LPWAN ayant été reçue directement par une pluralité de compteurs ; et, transmettre une seule copie de la trame LPWAN au serveur, ladite trame LPWAN étant associée dans la deuxième trame à une information représentative d'un des compteurs ayant reçu directement la trame LPWAN, choisi par le système intermédiaire suivant un critère prédéterminé.

Selon un mode de réalisation, le critère prédéterminé consiste à choisir la première copie de la trame LPWAN reçue ou aléatoirement une copie de la trame LPWAN ou une copie de la trame LPWAN reçue avec la meilleure qualité par un compteur du deuxième réseau.

Selon un mode de réalisation, lorsque suite à la transmission d'une trame LPWAN au serveur, la trame LPWAN ayant été reçue directement par une pluralité de compteurs, le dispositif intermédiaire reçoit une trame de réponse destinée au terminal de la part du serveur, le serveur ayant inséré dans la trame de réponse un identifiant d'un compteur choisi par le serveur pour relayer ladite trame de réponse vers le terminal, le procédé comprend : déterminer le compteur de la pluralité de compteurs ayant reçu la trame LPWAN avec la meilleure qualité ; et, insérer un identifiant du compteur déterminé dans la trame de réponse à la place de l'identifiant inséré par le serveur.

Selon un mode de réalisation, chaque trame LPWAN comprise dans une deuxième trame est encapsulée au format JSON.

Selon un troisième aspect de l'invention, l'invention concerne un programme d'ordinateur comprenant des instructions pour mettre en oeuvre, par un dispositif, le procédé selon le troisième aspect lorsque ledit programme est exécuté par un processeur dudit dispositif.

Selon un quatrième aspect de l'invention, l'invention concerne des moyens de stockage, stockant un programme d'ordinateur comprenant des instructions pour mettre en oeuvre, par un dispositif, le procédé selon le premier aspect lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un exemple de système de type AMM dans lequel est mise en oeuvre l'invention ;
- la Fig. 2 illustre schématiquement une représentation d'un réseau logique correspondant à un réseau physique illustré dans la Fig. précédente;
- La Fig. 3 illustre schématiquement un exemple d'architecture matérielle d'un module de traitement ;
- la Fig. 4 illustre schématiquement un exemple de mise en oeuvre dans un système de type AMM d'un procédé permettant d'acheminer des trames émises par un terminal sur un réseau de type LPWAN ;
- la Fig. 5 illustre schématiquement une encapsulation d'une trame LoRa montante dans une trame G3-PLC ;
- la Fig. 6 illustre schématiquement une encapsulation d'une trame LoRa montante dans une trame HTTP;
- la Fig. 7 illustre schématiquement une encapsulation dans le format JSON d'une trame LoRa montante dans une trame HTTP ;
- la Fig. 8 illustre schématiquement une encapsulation dans le format JSON d'une trame LoRa descendante dans une trame HTTP;
- la Fig. 9 illustre schématiquement une encapsulation d'une trame LoRa descendante dans une trame HTTP;
- la Fig. 10 illustre schématiquement une encapsulation d'une trame LoRa descendante dans une trame G3-PLC; et,
- la Fig. 11 illustre schématiquement une procédure d'autorisation de connexion adaptée à l'invention.

L'invention est décrite dans un contexte de réseau CPL d'un système de type AMM dans lequel les communications sont basées sur le protocole G3-PLC. Par ailleurs, comme nous le verrons par la suite, certains compteurs du réseau CPL comprennent une interface de communication permettant de communiquer sur un réseau LPWAN de type LoRa en utilisant des trames conformes au protocole LoRaWAN. L'invention pourrait tout aussi bien être utilisée dans un autre contexte. Le réseau CPL du système de type AMM pourrait tout aussi bien utiliser des communications basées sur les spécifications PRIME. Par ailleurs, le réseau LPWAN pourrait être un réseau SigFox.

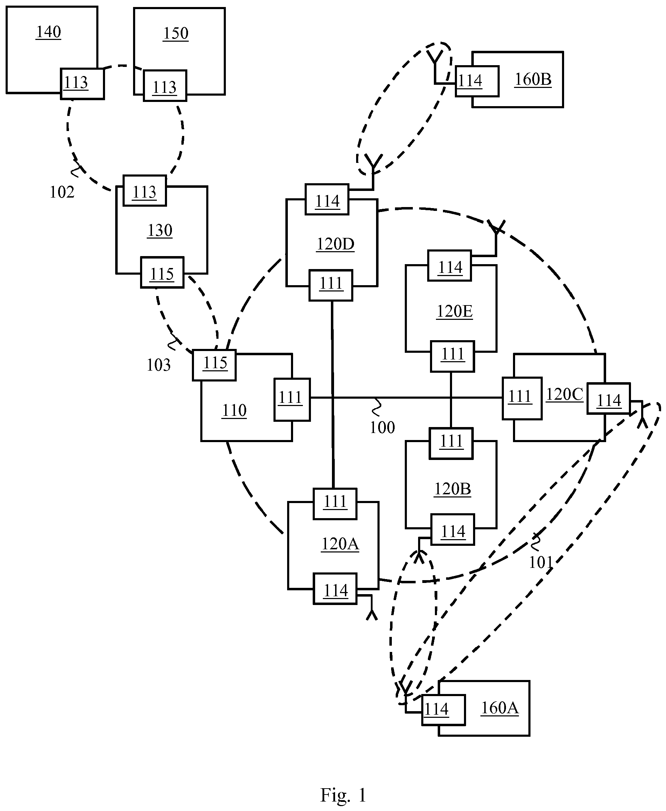

La **Fig. 1** illustre schématiquement un exemple de système de type AMM dans lequel est mise en oeuvre l'invention.

Le système de type AMM de la Fig. 1 comporte un système de terminaison, dit système HES (« Head End System (HES) » en terminologie anglo-saxonne) 140. Le système HES 140 reçoit des informations de mesure de consommation électrique collectées par une pluralité de compteurs 120A, 120B, 120C, 120D et 120E (notés 120A-E) et les traite. Pour permettre auxdits compteurs de transmettre lesdites informations au système HES 140, des communications CPL sont établies entre chacun desdits compteurs et un concentrateur de données 110. Le système de communication comporte typiquement une pluralité de concentrateurs de données 110, un seul étant représenté sur la Fig. 1. A chaque concentrateur de données 110 est connectée, de manière logique, une pluralité de compteurs.

Un réseau CPL 101 est ainsi formé entre chaque concentrateur de données 110 et la pluralité de compteurs qui lui est connectée. Ce réseau CPL 101 s'appuie sur un réseau de distribution électrique 100 (*i.e.* réseau physique) servant à alimenter en électricité les installations électriques que lesdits compteurs 120A-E sont en charge de surveiller. Chaque compteur 120A-E comporte ainsi une interface 111 de communication CPL permettant de communiquer via le réseau CPL 101. De même, chaque concentrateur de données 110 comporte une telle interface 111 de communication CPL permettant de communiquer via le réseau CPL 101. Selon un exemple de réalisation, le réseau CPL 101 est conforme au protocole G3-PLC.

Dans la Fig. 1, chaque compteur 120A-E comprend une interface de communication 114 avec un réseau de type LPWAN de type LoRa, dit réseau LoRa. Le réseau LoRa permet à chaque compteur 120A-E de communiquer avec des terminaux se trouvant à portée desdits compteurs, chaque terminal étant connecté au réseau LoRa par l'intermédiaire d'une même interface de communication 114. Dans la Fig. 1, deux terminaux de type objet connecté 160A et 160B sont représentés. Les compteurs 120A-E et les terminaux 160A et 160B communiquent selon le protocole LoRaWAN. Dans la Fig. 1, chaque trame LoRa montante émise en mode multidiffusion par le terminal 160A est reçue par les compteurs 120B et 120C. Chaque trame LoRa montante émise en mode multidiffusion par le terminal 160B est reçue par le compteur 120D.

Chaque trame LoRa montante émise par un terminal est destinée à un serveur 150, dit serveur de réseau LoRa (« LoRa Network Server (LNS) » en terminologie anglo-saxonne) ou serveur LNS. Le serveur LNS 150 reçoit les trames LoRa montantes collectées par le concentrateur de données 110 et les traite.

Placé entre chaque concentrateur de données 110 et le système HES 140 et le serveur LNS 150, le système de la Fig. 1 comprend un système intermédiaire 130, dit système réseau de retransmission ou système FNS (« Forwarding Network Server » en terminologie anglo-saxonne). Chaque trame échangée entre chaque concentrateur de données 110 et le système HES 140 ou le serveur LNS 150 transite par le système FNS 130.

Pour permettre de relayer les informations transmises par les compteurs 120A-E à destination du système HES 140, chaque concentrateur de données 110 comporte en outre une interface 115 de communication avec un réseau de communication 103, auquel est aussi connecté le système FNS 130.

Le système FNS 130 comporte ainsi une interface 115 de communication via le réseau de communication 103 lui permettant de communiquer avec une pluralité de concentrateurs de données 110. Le réseau de communication 103 est préférentiellement un réseau de type IP (« Internet Protocol » en terminologie anglo-saxonne, tel que défini dans le document normatif RFC 791), tel que l'Internet. Dans un mode de réalisation, les communications entre chaque concentrateur de données 110 et le système FNS 130 utilisent des requêtes HTTP.

Le système HES 140 et le serveur LNS 150 comportent ainsi une interface de communication 113 via un réseau de communication 102 leur permettant de communiquer avec le système FNS 130. Le système FNS 130 comporte ainsi une interface de communication 113 via le réseau de communication 102 lui permettant de communiquer avec le système HES 140 et le serveur LNS 150. Le réseau de communication 102 est préférentiellement un réseau de type IP. Dans un mode de réalisation, les communications entre le système HES 140 (respectivement le serveur LNS 150) et le système FNS 130 utilisent des requêtes HTTP.

Le système FNS 130 est donc relié à chaque concentrateur de données 110 par l'intermédiaire du réseau 103 et au serveur LNS 150 par l'intermédiaire du réseau 102.

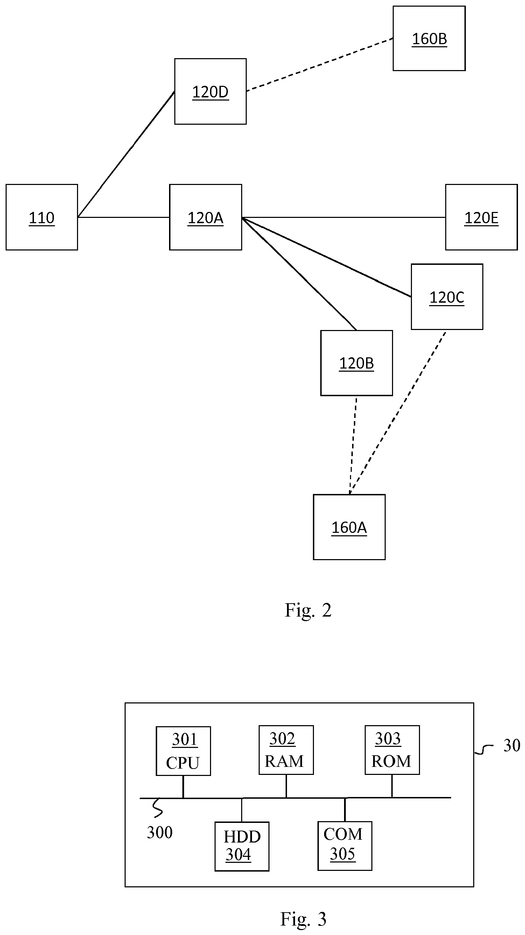

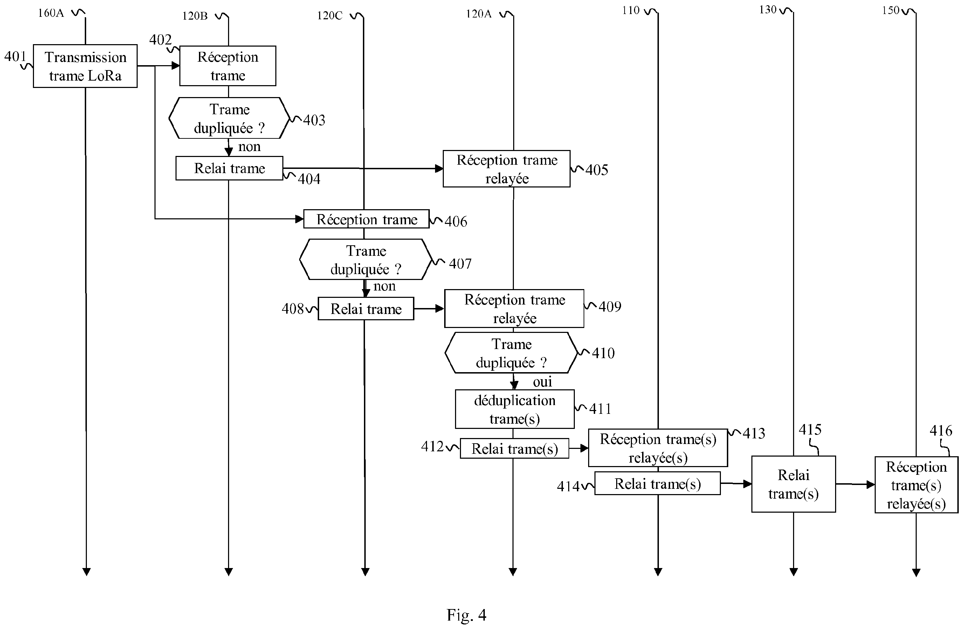

Dans le système de la Fig. 1, chaque compteur possédant une interface de communication 114 implémente une passerelle LoRa et joue donc un rôle similaire à une passerelle LoRa dans un réseau LoRa classique vis-à-vis des terminaux. Toutefois, comme nous le verrons par la suite en relation avec les Figs. 2 et 4, pour éviter de surcharger le système de type AMM par des requêtes LoRa, toutes les requêtes LoRa montantes reçues par un compteur 120A-E ne sont pas remontées vers le système FNS 130.

Chaque entité du système de la Fig. 1, que ce soit un concentrateur de données 110, un compteur 120A-E, le système FNS 130, le système HES 140 et le serveur LNS 150, comprend un module de traitement 30 (non représenté) permettant à ces entités de contribuer à une mise en oeuvre de l'invention.

La **Fig. 2** illustre schématiquement une représentation d'un réseau logique correspondant au réseau CPL mis en oeuvre sur le réseau électrique 100 illustré dans la Fig. 1.

Comme nous l'avons évoqué en relation avec la Fig. 1, chaque compteur 120A-E est connecté à un concentrateur de données 110. Par contre, d'un point de vue logique, certains compteurs, tels que les compteurs 120A et 120D sont connectés directement au concentrateur de données 110 alors que d'autres compteurs, tels que les compteurs 120B, 120C et 120E sont connectés indirectement au concentrateur de données 110 par l'intermédiaire d'un autre compteur. Ainsi, les compteurs 120A et 120D peuvent communiquer directement avec le concentrateur de données 110. Par contre, chaque trame conforme au standard G3-PLC, appelée *trame G3-PLC* par la suite, émise par les compteurs 120B, 120C et 120E doit passer par le compteur 120A pour atteindre le concentrateur de données 110. Il se crée donc une hiérarchie parent/enfant entre certains compteurs. Par exemple, le compteur 120A est parent vis-à-vis des compteurs 120B, 120C et 120E, qui sont eux-mêmes enfants du compteur 120A.

Comme nous l'avons vu en relation avec la Fig. 1, chaque trame LoRa montante émise par le terminal 160A est reçue par les compteurs 120B et 120C. Par conséquent, lorsqu'une trame LoRa montante est émise par le terminal 160A, celle-ci est reçue par le compteur 120B qui la relaie au compteur 120A et par le compteur 120C qui la relaie lui aussi au compteur 120A. La même trame LoRa montante est donc reçue deux fois par le compteur 120A. Dans un réseau LoRa classique, chaque passerelle LoRa recevant une trame LoRa montante, la relaie vers un serveur LNS avec lequel elle est connectée. Une passerelle LoRa ne se préoccupe pas de savoir si une ou plusieurs autres passerelles LoRa ont relayé la même trame LoRa montante. Dans un réseau LoRa classique, une passerelle LoRa recevant une trame LoRa montante, n'a aucun moyen de savoir si cette trame LoRa montante a été reçue et relayée vers le serveur LNS par une autre passerelle LoRa.

Comme on peut le voir dans la Fig. 2, la situation est différente lorsque la passerelle Lora est intégrée dans un compteur tel que les compteurs 120A-E. En effet, certains compteurs, comme le compteur 120A, du fait de l'organisation suivant une hiérarchie parent/enfant des compteurs dans le système de type AMM, reçoivent plusieurs fois la même trame. En analysant les trames LoRa montantes qu'il reçoit, un compteur peut savoir qu'il reçoit plusieurs fois la même trame LoRa montante.

La **Fig. 3** illustre schématiquement un exemple d'architecture matérielle du module de traitement 30.

Le module de traitement 30 comprend alors, reliés par un bus de communication 300: un processeur ou CPU 301 ; une mémoire vive RAM 302 ; une mémoire morte ROM 303 ; une unité de stockage ou un lecteur de support de stockage, tel qu'un lecteur de cartes SD 304 ; un ensemble d'interfaces de communication 305 permettant au module de traitement 30 de communiquer avec d'autres entités du système de la Fig. 1.

Lorsque le module de traitement 30 est compris dans un compteur 120A-E, l'ensemble d'interfaces de communication 305 comprend l'interface de communication 111 vers le réseau CPL 101 et l'interface de communication 114 vers un réseau LPWAN.

Lorsque le module de traitement 30 est compris dans un concentrateur de données 110, l'ensemble d'interfaces de communication 305 comprend l'interface de communication 111 vers le réseau CPL 101 et l'interface de communication 115 vers le réseau de communication 103.

Lorsque le module de traitement 30 est compris dans le système FNS 130, l'ensemble d'interfaces de communication 305 comprend l'interface de communication 113 vers le réseau 102 et l'interface de communication 115 vers le réseau 103.

Lorsque le module de traitement 30 est compris dans le système HES 140, l'ensemble d'interfaces de communication 305 comprend l'interface de communication 113 vers le réseau 102.

Lorsque le module de traitement 30 est compris dans le serveur LNS 150, l'ensemble d'interfaces de communication 305 comprend l'interface de communication 113 vers le réseau 102.

Lorsque le module de traitement 30 est compris dans un terminal 160A ou 160B, l'ensemble d'interfaces de communication 305 comprend l'interface de communication 114 vers le réseau LPWAN.

Le processeur 301 est capable d'exécuter des instructions chargées dans la RAM 302 à partir de la ROM 303, d'une mémoire externe (non représentée), d'un support de stockage, tel qu'une carte SD, ou d'un réseau de communication. Lorsque l'entité (*i.e.* le concentrateur de données 110, un compteur 120A-E, le système FNS 130, le système HES 140, le serveur LNS 150, un terminal 160A ou 160B) est mise sous tension, le processeur 301 est capable de lire de la RAM 302 des instructions et de les exécuter. Ces instructions forment un programme d'ordinateur causant la mise en oeuvre, par le processeur 301 d'un procédé décrit en relation avec la Fig. 4.

Tout ou partie du procédé décrit en relation avec la Fig. 4 peut être implémenté sous forme logicielle par exécution d'un ensemble d'instructions par une machine programmable, telle qu'un DSP (« Digital Signal Processor » en terminologie anglo-saxonne) ou un microcontrôleur, ou être implémenté sous forme matérielle par une machine ou un composant dédié, tel qu'un FPGA (« Field-Programmable Gate Array » en terminologie anglo-saxonne) ou un ASIC (« Application-Specific Integrated Circuit » en terminologie anglo-saxonne).

La **Fig. 4** illustre schématiquement un exemple de mise en oeuvre dans un système de type AMM d'un procédé permettant d'acheminer des trames émises par des terminaux sur un réseau de type LPWAN.

Dans la Fig. 4 nous prenons l'exemple d'une trame LoRa montante émise par le terminal 160A. Une mise en oeuvre similaire aurait été obtenue pour une trame LoRa montante émise par le terminal 160B.

Dans une étape 401, le module de traitement 30 du terminal 160A provoque un envoi d'une trame LoRa Montante. Cette trame LoRa montante est transmise en mode multidiffusion par l'intermédiaire de l'interface de communication 114 du terminal 160A. La trame LoRa montante comprend un identifiant du terminal 160A sous forme d'une adresse *DevAddr.*

Dans une étape 402, le module de traitement 30 du compteur 120B détecte une réception par le compteur 120B sur son interface de communication 114, de la trame LoRa montante.

Bien que ces deux trames soient identiques, par la suite nous appelons la trame LoRa montante lorsqu'elle est envoyée par le terminal 160A, trame émise et la trame LoRa montante lorsqu'elle est reçue par un compteur, par exemple ici le compteur 120B, trame reçue.

Dans une étape 403, afin de décider si la trame reçue par le compteur 120B doit être relayée, le module de traitement 30 du compteur 120B détermine si cette trame respecte un critère prédéterminé.

Dans un mode de réalisation, dit mode non-temporisé, le critère prédéterminé consiste à sélectionner systématiquement la trame correspondant à ladite trame émise reçue en premier par le compteur 120B.

Dans un mode de réalisation, dit premier mode temporisé, lors de l'étape 403, le module de traitement 30 se met en attente pendant une période prédéterminée *TEMPO* suivant la première réception d'une trame correspondant à une même trame émise. La période prédéterminée *TEMPO* est par exemple de « 200 » ms. Dans ce mode de réalisation, le critère prédéterminé consiste à sélectionner aléatoirement une trame parmi les trames correspondant à ladite trame émise reçues par le compteur 120B pendant la période prédéterminée *TEMPO.*

Dans un mode de réalisation, dit deuxième mode temporisé, lors de l'étape 403, le module de traitement 30 se met en attente pendant la période prédéterminée *TEMPO* suivant la première réception d'une trame correspondant à une même trame émise. Dans ce mode de réalisation, le critère prédéterminé consiste à sélectionner la trame offrant une meilleure qualité de réception parmi les trames correspondant à ladite trame émise reçues pendant la période prédéterminée *TEMPO.*

Les trames qui ne correspondent pas au critère prédéterminé sont systématiquement rejetées.

Dans le cas de la Fig. 4, le compteur 120B ne reçoit qu'une fois la trame émise par le terminal 160A. Par conséquent, quel que soit le mode de réalisation, la seule trame reçue est sélectionnée pour être relayée.

Dans une étape 404, le module de traitement 30 du compteur 120B encapsule la trame reçue dans une trame G3-PLC et transmet cette trame G3-PLC en direction du concentrateur de données 110. Le compteur 120B transmet donc la trame G3-PLC au compteur 120A. La trame G3-PLC émise par le compteur 120B est appelée par la suite première trame G3-PLC.

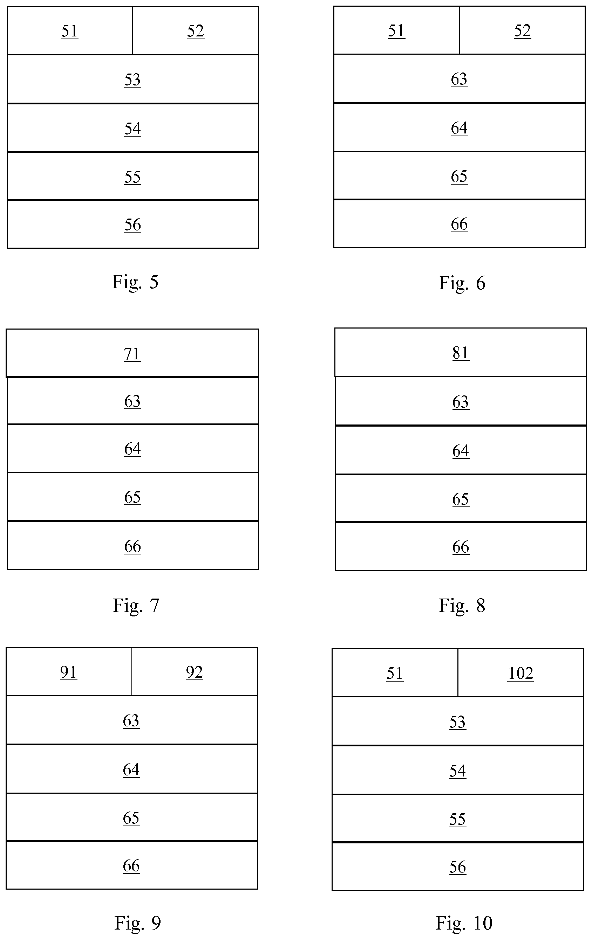

La **Fig. 5** illustre schématiquement une encapsulation d'une trame LoRa montante dans une trame G3-PLC.

La trame représentée dans la Fig. 5 est donc une trame conforme au standard G3-PLC. Cette trame G3-PLC comprend dans une sous-partie 56, un entête G3-PLC, dans une sous-partie 55, un entête 6LowPAN (Réseau local sans fil à faible puissance IPv6 : « IPv6 Low power Wireless Personal Area Networks » en terminologie anglo-saxonne), dans une sous-partie 54, un entête IPv6 (Protocole Internet version 6 : « Internet Protocol version 6 » en terminologie anglo-saxonne) et dans une sous-partie 53, un entête UDP (Protocole de datagram utilisateur : « User Datagram Protocol » en terminologie anglo-saxonne). La trame G3-PLC comprend en outre, une première sous-partie 51 comprenant la trame LoRa montante encapsulée et une deuxième sous-partie 52. Les sous-parties 51 et 52 forment une partie utile de la trame G3-PLC. La deuxième sous-partie 52 est destinée à recevoir des identifiants de chaque compteur ayant reçu directement (*i.e.* à travers une interface réseau 114) la trame LoRa encapsulée. Dans un mode de réalisation, chaque passerelle LoRa implémentée par un compteur possède une adresse IP (Protocole Internet : « Internet Protocol » en terminologie anglo-saxonne). L'identifiant d'un compteur ayant reçu la trame LoRa montante est dans ce cas, l'adresse IP de la passerelle LoRa implémentée par ce compteur.

Dans ces modes de réalisation, lors de l'étape 404, le compteur 120B stocke dans la sous-partie 52 l'identifiant du compteur 120B.

Dans un mode de réalisation, en plus de stocker un identifiant de chaque compteur ayant reçu la trame LoRa montante, la sous-partie 52 stocke pour chaque compteur ayant reçu la trame LoRa montante, une information représentative d'une qualité de réception de ladite trame LoRa montante par ledit compteur. L'information de qualité est par exemple un rapport signal sur bruit (« signal to noise ratio (SNR) » en terminologie anglo-saxonne) et/ou une indication sur la force du signal reçu (« received signal strength indication (RSSI) » en terminologie anglo-saxonne).

Dans ce mode de réalisation, la sous-partie 52 comprend une information représentative de la qualité de réception par le compteur 120B de la trame émise par le terminal 160A.

Dans une étape 406, le module de traitement 30 du compteur 120C détecte une réception par le compteur 120C sur son interface de communication 114, de la trame émise par le terminal 160A.

Dans une étape 407, le module de traitement 30 du compteur 120C applique une étape identique à l'étape 403. Le résultat de l'étape 407 est alors identique au résultat de l'étape 403, puisque le module de traitement 30 du compteur 120C sélectionne la seule trame reçue et relaie cette trame lors de l'étape 408 en direction du concentrateur de données 110 dans une trame G3-PLC. La trame G3-PLC émise par le compteur 120C est appelée par la suite deuxième trame G3-PLC.

La deuxième trame G3-PLC reprend le format de trame décrit en relation avec la Fig. 5. Dans la sous-partie 51, elle comprend la même trame LoRa montante que la première trame G3-PLC. Dans la sous-partie 52, elle comprend l'identifiant du compteur 120C. Dans un mode de réalisation, la sous-partie 52 comprend aussi une information représentative d'une qualité de réception de ladite trame LoRa montante par le compteur 120C.

Dans des étapes 405 et 409 le module de traitement 30 du compteur 120A reçoit respectivement la première trame G3-PLC et la deuxième trame G3-PLC sur son interface de communication 111.

Dans une étape 410, le module de traitement 30 du compteur 120A applique une étape identique aux étapes 403 et 407. Toutefois, alors que les étapes 403 et 407 ont été exécutées dans un contexte où les compteurs 120B et 120C ne recevaient chacun qu'une trame correspondant à la trame émise, lors de l'étape 410, le compteur 120A reçoit deux trames correspondant à la trame émise.

Dans le cas du mode non-temporisé, le module de traitement 30 du compteur 120A sélectionne lors d'une étape 411 la première trame reçue correspondant à la trame émise dès réception de cette trame. La trame reçue lors de l'étape 405 est donc sélectionnée pour être relayée.

Dans le cas du premier mode temporisé, le module de traitement 30 du compteur 120A sélectionne aléatoirement, lors de l'étape 411, une trame parmi les trames correspondant à la trame émise qu'il a reçue. Par exemple, le module de traitement 30 du compteur 120A, sélectionne la trame reçue lors de l'étape 405 (*i.e.* la première trame G3-PLC).

Dans le cas du deuxième mode temporisé, le module de traitement 30 du compteur 120A sélectionne, lors de l'étape 411, la trame offrant la meilleure qualité de réception parmi les trames correspondant à la trame émise qu'il a reçue. Pour ce faire, le module de traitement 30 du compteur 120A utilise les informations représentatives d'une qualité de réception contenues dans la sous-partie 52 de chaque trame G3-PLC reçue (*i.e.* la première et la deuxième trame G3-PLC). Par exemple, le module de traitement 30 du compteur 120A, sélectionne la trame reçue lors de l'étape 409 (*i.e.* la deuxième trame G3-PLC).

Dans une étape 412, le module de traitement 30 du compteur 120A provoque le relai de la trame sélectionnée vers le concentrateur de données 110. La trame relayée respecte le format de trames décrit en relation avec la Fig. 5. Lors de l'étape 412, la trame relayée comprend la trame LoRa montante émise par le terminal 160A lors de l'étape 401 dans sa sous-partie 51. Par ailleurs, lors de l'étape 412, la trame relayée comprend dans sa sous-partie 52, l'identifiant de chaque compteur ayant reçu directement la trame LoRa montante (ici cela correspond aux compteurs 120B et 120C). Dans un mode de réalisation, la sous-partie 52 comprend de plus, pour chaque compteur ayant reçu directement la trame LoRa montante émise par le terminal 160A, une information représentative d'une qualité de réception de ladite trame par le compteur. Dans l'exemple de la Fig. 4, la trame G3-PLC relayée comprend une information représentative de la qualité de réception de la trame LoRa montante par le compteur 120B et une information représentative de la qualité de réception de la trame LoRa montante par le compteur 120C.

Dans une étape 413, le module de traitement 30 du concentrateur de données 110 détecte que le concentrateur de données 110 a reçu une trame G3-PLC. Lors de l'étape 413, la partie utile de la trame G3-PLC est extraite et encapsulée dans une trame HTTP.

La **Fig. 6** illustre schématiquement une encapsulation d'une trame LoRa montante dans une trame HTTP.

La trame HTTP comprend dans une sous-partie 66 par exemple un entête Ethernet, dans une sous-partie 65 un entête IP (IPv4 ou IPv6), dans une sous-partie 64 un entête TCP (protocole de contrôle de transmission : « transmission control protocol (TCP) » en terminologie anglo-saxonne) et dans une sous-partie 63 un entête HTTP. On retrouve dans une partie utile de la trame HTTP la sous-partie 51 et la sous-partie 52 comportant notamment l'identifiant de chaque compteur ayant relayé la trame LoRa montante (c'est-à-dire comportant pour chaque compteur ayant relayé la trame LoRa montante, l'adresse IP de la passerelle LoRa implémentée par ledit compteur). En variante, on peut utiliser le protocole TLS (« Transport Layer Security » en terminologie anglo-saxonne) avec HTTP, ce qui correspond à HTTPS (« Hyper Text Transfert Protocol Secure » en terminologie anglo-saxonne), de manière à transmettre de manière sécurisée.

Dans une étape 414, le module de traitement 30 du concentrateur de donnée 110 transmet la trame HTTP en direction du système FNS 130.

Le concentrateur de données 110 est classique. Il se contente de relayer la partie utile d'une trame G3-PLC dans une trame HTTP vers le système 130, sans se préoccuper du contenu de cette partie utile. Le concentrateur de données 110 ne sait pas faire une différence entre une partie utile contenant des données de métrologie émanant d'un compteur ou des données conformes au protocole LoRaWAN.

Lors d'une étape 415, le module de traitement 30 du système FNS 130 détecte que le système FNS 130 a reçu une trame HTTP. Lors de l'étape 415, le module de traitement 30 du système FNS 130 détermine pour la trame HTTP reçue, si la trame HTTP contient des données de métrologie émanant d'un compteur ou si elle contient des données conformes au protocole LoRaWAN. Pour ce faire, le module de traitement 30 du système FNS 130 détermine si la partie utile de la trame HTTP contient des sous-parties 51 et 52.

Lorsque la trame HTTP comprend des données de métrologie, la partie utile de la trame HTTP est extraite et encapsulée dans une nouvelle trame HTTP qui est transmise en direction du système HES 140.

Lorsque la trame HTTP comprend des sous-parties 51 et 52, le module de traitement 30 du système FNS 130 transmet les informations contenues dans la trame LoRa montante dans une trame HTTP au serveur LNS 150. Toutefois, le serveur LNS 150 est un serveur LNS classique destiné à fonctionner dans un réseau LoRa classique et donc à recevoir des trames HTTP comprenant des trames LoRa montantes en provenance de passerelles LoRa classiques. Le système FNS 130 doit donc transmettre au serveur LNS 150 des trames HTTP conformes à ce qu'aurait transmis une passerelle LoRa classique. Pour ce faire, le système FNS 130 utilise un format d'encapsulation de données compris par tous les serveurs LNS utilisés actuellement tel que le format JSON (Notation d'objet javascript, « JavaScript Object Notation » en terminologie anglo-saxonne) décrit dans le document « RFC7159 : The JavaScript Object Notation (JSON) Data Interchange Format ». Dans un mode de réalisation, la trame LoRa montante comprise dans la sous-partie 51 est encapsulée dans un conteneur conforme au format JSON. Dans un autre mode de réalisation, les données comprises dans la trame LoRa montante comprise dans la sous-partie 51 sont extraites de la trame LoRa montante, représentée dans le format JSON et insérées dans la trame HTTP à transmettre au serveur LNS 150. Pour les deux modes de réalisation, nous dirons par la suite que la trame LoRa montante est encapsulée dans le format JSON.

Dans un réseau LoRa classique, une passerelle LoRa relayant une trame LoRa montante provenant d'un terminal vers un serveur LNS dans un trame HTTP, insère un identifiant permettant de la reconnaître, tel que son adresse IP, dans la trame HTTP. Lorsque plusieurs passerelles LoRa relaient une même trame LoRa montante vers un serveur LNS, le serveur LNS utilise l'identifiant de chaque passerelle LoRa ayant effectué le relai pour désigner la passerelle LoRa devant relayer une trame LoRa descendante destinée au terminal à l'origine de la trame montante.

Dans l'exemple de la Fig. 4, le système FNS 130 reçoit une trame HTTP comprenant, dans la sous-partie 51, une trame Lora montante, et dans la sous-partie 52, un identifiant de chaque compteur ayant reçu directement la trame LoRa montante de la part du terminal 160A, c'est-à-dire un identifiant des compteurs 120B et 120C. Dans un mode de réalisation, la sous-partie 52 comprend aussi pour chaque compteur ayant reçu directement la trame LoRa montante, une information représentative de la qualité de réception de ladite trame LoRa montante par ledit compteur.

Afin d'être conforme aux trames HTTP que transmettrait une passerelle LoRa classique au serveur LNS 150, chaque trame HTTP générée par le système FNS 130 ne peut comprendre qu'un identifiant de compteur, cet identifiant étant compris par le serveur LNS 150 comme un identifiant de passerelle LoRa. Le module de traitement 30 du système FNS 130 choisit donc un des identifiants qu'il a reçus dans la sous-partie 52, ce qui revient à choisir le compteur possédant cet identifiant.

Dans un mode de réalisation, le module 30 du système FNS 130 choisit aléatoirement un identifiant parmi les identifiants reçu dans la sous-partie 51 de la trame HTTP reçue lors de l'étape 415.

Dans un mode de réalisation, lorsque la sous-partie 52 comprend une information représentative de la qualité de réception pour chaque compteur ayant reçu directement la trame LoRa montante, le module 30 du système FNS 130 choisit l'identifiant reçu dans la sous-partie 51 de la trame HTTP reçue lors de l'étape 415 correspondant à la meilleure information représentative de la qualité de réception.

La **Fig. 7** illustre schématiquement une encapsulation au format JSON d'une trame LoRa montante dans une trame HTTP.

On retrouve dans la trame HTTP représentée en Fig. 7, les sous-parties 63, 64, 65 et 66 déjà expliquées. La trame HTTP comprend de plus une sous-partie 71. La sous-partie 71 comprend la trame LoRa montante comprise dans la sous-partie 51 encapsulée dans le format JSON. Par ailleurs, la sous-partie 71 comprend l'identifiant du compteur ayant reçu directement la trame LoRa montante. Comme nous l'avons vu plus haut, cet identifiant est l'adresse IP de la passerelle LoRa implémentée par ledit compteur. Dans l'exemple de la Fig. 4, cette trame LoRa montante est celle qui a été sélectionnée lors de l'étape 411.

Dans une étape 416, le module de traitement du serveur LNS 150 détecte que le serveur LNS 150 a reçu la trame HTTP émise lors de l'étape 415 et traite cette trame HTTP.

Dans un réseau LoRa classique, les échanges de messages entre un terminal et un serveur LNS sont bidirectionnels. Un serveur LNS peut par exemple acquitter une trame LoRa montante. Pour ce faire, comme nous l'avons vu plus haut, si plusieurs passerelles LoRa ont reçu une même trame LoRa montante, le serveur LNS doit désigner parmi les passerelles LoRa ayant reçu la trame LoRa montante, la passerelle LoRa à utiliser pour relayer une réponse au message contenu dans la trame LoRa montante. La réponse est transmise du serveur LNS à la passerelle LoRa désignée dans une requête HTTP, puis en point à point, de la passerelle LoRa désignée au terminal dans une trame LoRa descendante conforme au protocole LoRaWAN.

Dans le cadre de l'invention, la présence du système FNS 130 permet de masquer le passage de la trame LoRa montante par le système de type AMM au serveur LNS 150. Du point de vue du serveur LNS 150, la trame HTTP reçue lors de l'étape 416 a été transmise par une passerelle LoRa classique suite à une réception par ladite passerelle LoRa classique d'une trame LoRa montante en provenance du terminal 160A. Le serveur LNS 150 ne sait pas que la trame LoRa montante a été reçue par au moins un compteur implémentant une passerelle LoRa. Le serveur LNS 150 réagit de la même manière à la réception de la trame HTTP par l'intermédiaire du système FNS 130 que s'il avait reçu cette trame HTTP de la part d'une passerelle LoRa classique. Toutefois, du fait de la suppression des trames LoRa montantes dupliquées entre les compteurs et le système FNS 130, tout se passe comme si la trame LoRa montante transmise par le terminal 160A n'avait été relayée que par une seule passerelle LoRa. Du point de vue de serveur LNS 150, cette passerelle LoRa est celle dont l'identifiant est indiquée dans la sous-partie 71 de la trame HTTP reçue lors de l'étape 416.

Dans un mode de réalisation, le module de traitement 30 du serveur LNS 150 désigne le compteur dont l'identifiant figure dans la sous-partie 71 de la trame HTTP reçue lors de l'étape 416. A partir de cette désignation, chaque trame générée par le serveur LNS 150 et destinée au terminal 160A, transitera par le compteur dont l'identifiant figure dans la sous-partie 71 de la trame HTTP reçue lors de l'étape 416.

Par la suite, nous supposons que la trame LoRa montante émise lors de l'étape 401 par le terminal 160A est une trame de demande de connexion (« Join Request » en terminologie anglo-saxonne). Dans ce cas, le procédé décrit en relation avec la Fig. 4 est un début d'une procédure de connexion correspondant à une phase de demande de connexion.

Lors de l'étape 416, le serveur LNS 150 reçoit donc dans la sous-partie 71 d'au moins une trame HTTP, une trame de demande de connexion.

Suite à la réception de la trame de demande de connexion, le serveur LNS 150 répond par une trame de d'autorisation de connexion (« JOIN ACCEPT » en terminologie anglo-saxonne).

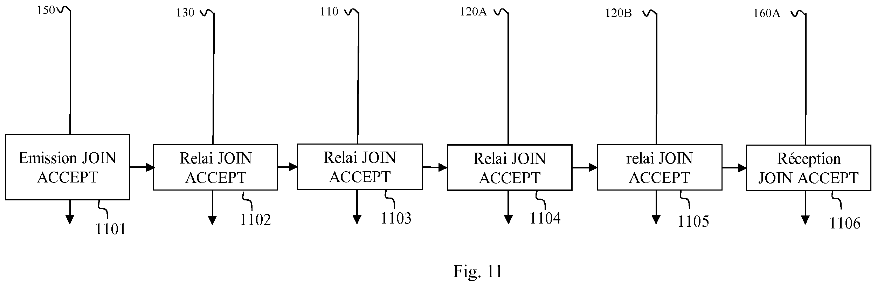

La **Fig. 11** illustre schématiquement une procédure d'autorisation de connexion.

Dans une étape 1101, le module de traitement du serveur LNS 150 génère une trame LoRa descendante contenant une autorisation de connexion, dite trame d'autorisation de connexion, destinée au dispositif 160A, encapsule la trame d'autorisation de connexion dans une trame HTTP dans le format JSON et provoque la transmission par le serveur LNS 150 de la trame HTTP au système FNS 130.

La **Fig. 8** illustre schématiquement une encapsulation d'une trame LoRa descendante dans une trame HTTP dans le format JSON.

On retrouve dans la trame HTTP de la Fig. 8, les sous-parties 63, 64, 65 et 66. Une sous-partie 81 comprend la trame d'autorisation de connexion et l'identifiant du compteur désigné encapsulée dans le format JSON. Dans l'exemple de la Fig. 11, il s'agit du compteur 120B. Par ailleurs, la sous-partie 81 comprend une date d'émission souhaitée de la trame LoRa descendante par le compteur désigné (*i.e.* le compteur 120B), cette date étant elle aussi encodée au format JSON. Cette date d'émission est une date relative par rapport à une date de réception d'une trame LoRa montante par le compteur désigné.

Dans une étape 1102, le système FNS 130 reçoit la trame HTTP encapsulant la trame d'autorisation de connexion dans le format JSON. Lors de l'étape 1102, le module de traitement 30 du système FNS 130 extrait de la trame HTTP la trame d'autorisation de connexion, l'identifiant du compteur désigné et date d'émission souhaitée de la trame LoRa descendante. Le module de traitement 30 du système FNS 130 insère ensuite la trame d'autorisation de connexion, l'identifiant du compteur désigné et la date d'émission souhaitée dans une nouvelle trame HTTP décrite ci-dessous en relation avec la Fig. 9.

La **Fig. 9** illustre schématiquement une encapsulation d'une trame LoRa descendante dans une trame HTTP.

On retrouve dans la trame HTTP de la Fig. 8, les sous-parties 63, 64, 65 et 66. La sous-partie 91 comprend la trame d'autorisation de connexion. Une sous-partie 92 comprend l'identifiant du compteur désigné et la date d'émission souhaitée de la trame LoRa descendante par le compteur désigné.

Ainsi, alors que la trame HTTP générée par le serveur LNS 150 est une trame HTTP classique qu'une passerelle LoRa classique est capable de traiter, la trame HTTP générée par le système FNS 130 est spécifiquement définie pour une transmission d'une trame LoRa descendante à un concentrateur de données.

Lors de l'étape 1102, le système FNS 130 transmet la trame HTTP au concentrateur de données 110.

Dans une étape 1103, le concentrateur de données 110 reçoit la trame HTTP. Lors de l'étape 1103, le module de traitement 30 du concentrateur de données 110 extrait la partie utile de la trame HTTP (*i.e.* les sous-parties 51 et 92) et forme une trame G3-PLC en utilisant cette partie utile.

La **Fig. 10** illustre schématiquement une encapsulation d'une trame LoRa descendante dans une trame G3-PLC.

On retrouve dans la trame G3-PLC, les sous-parties 53, 54, 55 et 56. La sous-partie 51 comprend la trame LoRa descendante. Une sous-partie 102 comprend la date d'émission souhaitée de la trame LoRa descendante par le compteur désigné indiquée dans la sous-partie 92.

Lors de l'étape 1103, le module de traitement 30 du concentrateur de données 110 lit l'adresse du compteur désigné dans la sous-partie 92 et détermine que pour atteindre le compteur désigné (*i.e.* le compteur 120B), il doit transmettre la trame G3-PLC qu'il a formée au compteur 120A. Le module de traitement 30 du concentrateur de données 110 provoque ensuite l'envoi de la trame G3-PLC au compteur 120A.

Dans une étape 1104, le compteur 120A reçoit la trame G3-PLC. Lors de l'étape 1104, le compteur 120A relaie cette trame en direction du compteur 120B.

Dans une étape 1105, le module de traitement 30 du compteur 120B détecte que le compteur 120B a reçu la trame G3-PLC et extrait la trame LoRa descendante de la trame G3-PLC. Le module de traitement 30 du compteur 120B se met en attente d'une réception d'une trame LoRa montante de la part du terminal 160A. Lorsque le module de traitement 30 du compteur 120B détecte une réception d'une trame LoRa montante, il note la date de réception de cette trame LoRa montante, ajoute la valeur de la date d'émission souhaitée contenu dans la trame G3-PLC reçue lors de l'étape 1105 à la date de réception pour obtenir une date effective de transmission, et transmet la trame LoRa descendante au terminal 160A à la date effective de transmission ainsi calculée.

Dans une étape 1106, le terminal 160A reçoit la trame LoRa descendante.

Dans l'exemple des Figs. 4 et 11, la trame LoRa montante est une demande de connexion au réseau LoRa et la trame LoRa descendante est une autorisation de connexion. Le procédé de la Figs. 4 et 11 fonctionnerait de la même manière si la trame LoRa montante émise par le terminal 160A avait été une trame contenant un message destiné au serveur LNS 150 et la trame LoRa descendante une trame d'acquittement de la trame LoRa montante.

Jusque-là, nous avons supposé que les compteurs 120A-E sont strictement identiques. Ainsi chaque compteur 120A-E comprend une interface possédant une interface de communication 114 et implémente une passerelle LoRa.

Dans un mode de réalisation, tous les compteurs 120A-E implémentent une passerelle LoRa, mais ne comprennent pas nécessairement une interface de communication 114. Un compteur 120A-E peut donc implémenter une passerelle LoRa sans pour autant être capable de recevoir ou transmettre des trames LoRa. Par exemple, dans ce mode de réalisation, le compteur 120A ne comprend pas d'interface de communication 114 mais implémente une passerelle LoRa ce qui lui permet d'exécuter notamment les étapes 405, 409, 410, 411, 412 et 1104.

Dans un mode de réalisation, certains compteurs ne comportent pas d'interface de communication 114 et n'implémentent pas de passerelle LoRa. Ces compteurs peuvent alors être des compteurs intermédiaires entre deux compteurs implémentant une passerelle LoRa. Ces compteurs ne font alors que relayer des trames G3-PLC, sans se préoccuper du contenu de ces trames.

Lorsque le système de communication comporte une pluralité de concentrateurs de données 110, il est possible que le système FNS 130 reçoive plusieurs trames HTTP encapsulant la même trame LoRa montante de la part de plusieurs concentrateurs de données 110 différents. Dans ce cas, les sous-parties 52 de chaque trame HTTP reçue contiennent des informations représentatives d'ensembles de compteurs ayant reçu directement la trame LoRa montante différents. On peut en effet imaginer qu'une trame LoRa montante émise par le terminal 160A est reçue par les compteurs 120B, 120C et 120D, mais que les compteurs 120B et 120C sont rattachés à un premier concentrateur de données 110 alors que le compteur 120D est rattaché à un deuxième concentrateur de données 110.

Dans ce cas, le module de traitement 30 du système FNS 130 choisi une trame LoRa montante encapsulée dans la sous-partie 51 d'une des trames HTTP reçues lors de l'étape 415.

Dans un mode de réalisation, la trame LoRa montante à relayer vers le serveur LNS 150 est par exemple celle comprise dans la sous-partie 51 de la trame HTTP reçue en premier par le système FNS 130. Dans ce mode de réalisation, le module de traitement 30 du système FNS 130 choisit le compteur apparaissant en premier parmi les compteurs ayant un identifiant dans la sous-partie 52 de la trame HTTP reçue en premier lors de l'étape 415.

Dans un mode de réalisation, la trame LoRa montante à relayer vers le serveur LNS 150 est par exemple choisie aléatoirement. Dans ce mode de réalisation, le module de traitement 30 du système FNS 130 choisit aussi aléatoirement un compteur parmi les compteurs ayant un identifiant dans la sous-partie 52 d'une des trames HTTP reçues lors de l'étape 415.

Dans un autre mode de réalisation, la trame LoRa montante à relayer est celle comprise dans la trame HTTP comprenant dans sa sous-partie 52, la meilleure information de qualité de réception. Ce mode de réalisation revient à choisir la trame LoRa montante reçue avec la meilleure qualité de réception par un compteur. Dans ce mode de réalisation, le module de traitement 30 du système FNS 130 choisit aussi le compteur associé à la meilleure information représentative de qualité.

Dans un mode de réalisation, le choix du compteur désigné par le serveur LNS 150 peut être remis en cause par le système FNS 130. Ce mode de réalisation peut par exemple être appliqué lorsque la sous-partie 52 de la trame HTTP reçue par le système FNS 130 comprend une pluralité d'identifiants de compteur, chaque identifiant de compteur étant associé à une information représentative de qualité de réception de la trame LoRa montante, mais que le module de traitement 30 du système FNS 130 n'a pas choisi l'identifiant du compteur devant figurer dans la trame HTTP destinée au serveur LNS 150 sur la base desdites informations représentatives d'une qualité de réception. Dans ce cas, l'identifiant du compteur figurant dans la trame HTTP reçue par le serveur LNS 150 n'est pas forcément l'identifiant du compteur ayant reçu la trame LoRa montante avec la meilleure qualité. C'est toutefois ce compteur qui est choisi par le module de traitement 30 du serveur LNS 150, puisque seul son identifiant figure dans la trame HTTP reçue par le serveur LNS 150. Ce cas peut se produire lorsque le système FNS 130 relaie la trame LoRa montante le plus rapidement possible vers le serveur LNS 150, sans attendre d'avoir analysé les informations de qualité contenues dans la sous partie 52. Dans ce mode de réalisation, lors de l'étape 1102, le module de traitement 30 du système FNS 130 détermine l'identifiant de compteur correspondant à la meilleure information représentative d'une qualité de réception et insère l'identifiant déterminé dans la sous-partie 92 plutôt que l'identifiant de compteur figurant dans la sous-partie 82 comprise dans la trame HTTP reçue de la part du serveur LNS 150.

## Revendications

1. Système de communication comprenant un terminal LPWAN (160A) et un serveur (150), ledit terminal (160A) étant adapté pour échanger des trames LPWAN avec au moins une passerelle (120B, 120C), dite passerelle LPWAN, par l'intermédiaire d'un premier réseau sans fil de type LPWAN, à grande portée et à faible consommation d'énergie, et le serveur (150) étant adapté pour échanger des trames LPWAN avec des passerelles LPWAN, chaque trame échangée entre le terminal (160A) et le serveur (150) devant transiter par un compteur électrique parmi une pluralité de compteurs électriques (120A, 120B, 120C, 120D, 120E) et un concentrateur de données (110) compris dans un deuxième réseau de communication par courants porteurs en ligne (101) d'un système de gestion automatique de relevés de la pluralité de compteurs électriques (120A, 120B, 120C, 120D, 120E), dits compteurs, lesdits compteurs de la pluralité de compteurs étant rattachés à au moins un concentrateur de données (110) via le deuxième réseau (101), au moins un compteur de la pluralité implémentant une passerelle LPWAN et comportant une interface de communication (114) lui permettant d'échanger des trames LPWAN avec ledit terminal (160A) par l'intermédiaire du premier réseau (101), le système étant **caractérisé en ce qu'**il comprend en outre un dispositif de transmission de trames (130), relié audit concentrateur de données (110) par l'intermédiaire d'un troisième réseau (103) et audit serveur (150) par l'intermédiaire d'un quatrième réseau (102), configuré pour que chaque trame LPWAN échangée entre le dispositif (130) et le serveur (150) soit encapsulée dans une deuxième trame conforme à un format de trames que le serveur (150) échangerait avec une passerelle LPWAN, et pour que, lorsqu'une trame LPWAN émise par le terminal (160A) et reçue directement par une pluralité desdits compteurs et par une pluralité de desdits concentrateurs de données du deuxième réseau de sorte que le dispositif (130) reçoive plusieurs copies de la trame LPWAN, le dispositif (130) transmet une seule copie de la ladite trame LPWAN au serveur (150), ladite trame LPWAN étant associée, dans la deuxième trame qui l'encapsule, à une information représentative d'un des compteurs ayant reçu directement la trame LPWAN, choisi par le dispositif (130) suivant un critère prédéterminé .

2. Procédé permettant d'échanger des premières trames, dites trames LPWAN, entre un terminal (160A) et un serveur (150), ledit terminal étant adapté pour échanger des trames LPWAN avec au moins une passerelle, dite passerelle LPWAN, par l'intermédiaire d'un premier réseau sans fil à grande portée et à faible consommation d'énergie, et le serveur étant adapté pour échanger des trames LPWAN avec des passerelles LPWAN, chaque trame LPWAN échangée entre le terminal et le serveur devant transiter par au moins un compteur et un concentrateur de données reliés entre eux par un deuxième réseau de communication par courants porteurs en ligne et formant un système de gestion automatique de relevés d'une pluralité de compteurs électriques, au moins un compteur implémente une passerelle LPWAN et comporte une interface de communication (114) lui permettant d'échanger des trames LPWAN avec ledit terminal par l'intermédiaire du premier réseau, le procédé étant exécuté par un dispositif intermédiaire (130) relié à chaque concentrateur de données (110) par l'intermédiaire d'un troisième réseau (103) et au serveur (150) par l'intermédiaire d'un quatrième réseau (102) de sorte que chaque trame LPWAN échangée entre ledit terminal (160A) et le serveur (150) transite par le dispositif intermédiaire (130), le procédé étant **caractérisé en ce que** chaque trame LPWAN échangée entre le dispositif intermédiaire (130) et le serveur (150) est encapsulée dans une deuxième trame conforme à un format de trames que le serveur échangerait avec une passerelle LPWAN, et **en ce qu'**il comprend :
- recevoir plusieurs copies d'une même trame LPWAN émise par le terminal (160A) de la part d'une pluralité de concentrateur de données (110), la trame LPWAN ayant été reçue directement par une pluralité de compteurs ; et,
- transmettre une seule copie de la trame LPWAN au serveur (150), ladite trame LPWAN étant associée dans la deuxième trame à une information représentative d'un des compteurs ayant reçu directement la trame LPWAN, choisi par le dispositif intermédiaire suivant un critère prédéterminé.

3. Procédé selon la revendication 2 **caractérisé en ce que**, le critère prédéterminé consiste à choisir la première copie de la trame LPWAN reçue ou aléatoirement une copie de la trame LPWAN ou une copie de la trame LPWAN reçue avec la meilleure qualité par un compteur du deuxième réseau.

4. Procédé selon la revendication 2 ou 3, **caractérisé en ce que**, lorsque suite à la transmission d'une trame LPWAN au serveur, la trame LPWAN ayant été reçue directement par une pluralité de compteurs, le dispositif intermédiaire (130) reçoit une trame de réponse destinée au terminal de la part du serveur (150), le serveur ayant inséré dans la trame de réponse un identifiant d'un compteur choisi par le serveur (150) pour relayer ladite trame de réponse vers le terminal (160A), le procédé comprenant :
- déterminer le compteur la pluralité de compteurs ayant reçu la trame LPWAN avec la meilleure qualité ; et,
- insérer un identifiant du compteur déterminé dans la trame de réponse à la place de l'identifiant inséré par le serveur.

5. Procédé selon la revendication 2, 3 ou 4 **caractérisé en ce que**, chaque trame LPWAN comprise dans une deuxième trame est encapsulée au format JSON.

6. Programme d'ordinateur, **caractérisé en ce qu'**il comprend des instructions pour mettre en oeuvre, par un dispositif, le procédé selon l'une des revendications 2 à 5 lorsque ledit programme est exécuté par un processeur dudit dispositif (130) et lorsque ledit dispositif (130) est inclus dans le système selon la revendication 1.

7. Moyens de stockage, **caractérisés en ce qu'**ils stockent un programme d'ordinateur comprenant des instructions pour mettre en oeuvre, par un dispositif, le procédé selon l'une des revendications 2 à 5 lorsque ledit programme est exécuté par un processeur dudit dispositif et lorsque ledit dispositif est inclus dans le système selon la revendication 1.

## Patentansprüche

1. Kommunikationssystem, das ein LPWAN-Endgerät (160A) und einen Server (150) enthält, wobei das Endgerät (160A) geeignet ist, mittels mindestens eines ersten drahtlosen Netzwerks vom Typ LPWAN mit großer Reichweite und geringem Energieverbrauch LPWAN-Frames mit mindestens einem Gateway (120B, 120C), LPWAN-Gateway genannt, auszutauschen, und der Server (150) geeignet ist, LPWAN-Frames mit LPWAN-Gateways auszutauschen, wobei jeder zwischen dem Endgerät (160A) und dem Server (150) ausgetauschte Frame einen Stromzähler unter einer Vielzahl von Stromzählern (120A, 120B, 120C, 120D, 120E) und einen Datenkonzentrator (110) durchqueren muss, der in einem zweiten Powerline-Kommunikationsnetzwerk (101) eines automatischen Verwaltungssystems von Ablesungen der Vielzahl von Stromzählern (120A, 120B, 120C, 120D, 120E), Zähler genannt, enthalten ist, wobei die Zähler der Vielzahl von Zählern über das zweite Netzwerk (101) mit mindestens einem Datenkonzentrator (110) verbunden sind, wobei mindestens ein Zähler der Vielzahl ein LPWAN-Gateway implementiert und eine Kommunikationsschnittstelle (114) aufweist, die ihm ermöglicht, mittels des ersten Netzwerks (101) LPWAN-Frames mit dem Endgerät (160A) auszutauschen, wobei das System **dadurch gekennzeichnet ist, dass** es außerdem eine Frameübertragungsvorrichtung (130) enthält, die mittels eines dritten Netzwerks (103) mit dem Datenkonzentrator (110) und mittels eines vierten Netzwerks (102) mit dem Server (150) verbunden ist, konfiguriert, damit jeder zwischen der Vorrichtung (130) und dem Server (150) ausgetauschte LPWAN-Frame in einem zweiten Frame gemäß einem Frameformat eingekapselt ist, das der Server (150) mit einem LPWAN-Gateway austauschen würde, und damit, wenn ein vom Endgerät (160A) gesendeter LPWAN-Frame direkt von einer Vielzahl der Zähler und von einer Vielzahl der Datenkonzentratoren des zweiten Netzwerks empfangen wird, so dass die Vorrichtung (130) mehrere Kopien des LPWAN-Frames empfängt, die Vorrichtung (130) eine einzige Kopie des LPWAN-Frames an den Server (150) überträgt, wobei der LPWAN-Frame im zweiten Frame, der ihn einkapselt, einer Information zugeordnet ist, die für einen der Zähler repräsentativ ist, der den LPWAN-Frame direkt empfangen hat, ausgewählt von der Vorrichtung (130) gemäß einem vorbestimmten Kriterium.

2. Verfahren, das es ermöglicht, erste Frames, LPWAN-Frames genannt, zwischen einem Endgerät (160A) und einem Server (150) auszutauschen, wobei das Endgerät geeignet ist, mittels eines ersten drahtlosen Netzwerks mit großer Reichweite und mit geringem Energieverbrauch LPWAN-Frames mit mindestens einem Gateway, LPWAN-Gateway genannt, auszutauschen, und der Server geeignet ist, LPWAN-Frames mit LPWAN-Gateways auszutauschen, wobei jeder zwischen dem Endgerät und dem Server ausgetauschte LPWAN-Frame mindestens einen Zähler und einen Datenkonzentrator durchqueren muss, die miteinander durch ein zweites Powerline-Kommunikationsnetzwerk verbunden sind und ein automatisches Verwaltungssystem von Ablesungen einer Vielzahl von Stromzählern bilden, wobei mindestens ein Zähler ein LPWAN-Gateway implementiert und eine Kommunikationsschnittstelle (114) aufweist, die ihm ermöglicht, mittels des ersten Netzwerks LPWAN-Frames mit dem Endgerät auszutauschen, wobei das Verfahren von einer Zwischenvorrichtung (130) ausgeführt wird, die mittels eines dritten Netzwerks (103) mit jedem Datenkonzentrator (110) und mittels eines vierten Netzwerks (102) mit dem Server (150) verbunden ist, so dass jeder zwischen dem Endgerät (160A) und dem Server (150) ausgetauschte LPWAN-Frame die Zwischenvorrichtung (130) durchquert, wobei das Verfahren **dadurch gekennzeichnet ist, dass** jeder zwischen der Zwischenvorrichtung (130) und dem Server (150) ausgetauschte LPWAN-Frame in einem zweiten Frame gemäß einem Frameformat eingekapselt ist, das der Server mit einem LPWAN-Gateway austauschen würde, und dass es enthält:
- Empfangen mehrerer Kopien eines gleichen vom Endgerät (160A) gesendeten LPWAN-Frames von einer Vielzahl von Datenkonzentratoren (110), wobei der LPWAN-Frame direkt von einer Vielzahl von Zählern empfangen wurde; und
- Übertragen einer einzigen Kopie des LPWAN-Frames an den Server (150), wobei der LPWAN-Frame im zweiten Frame einer Information zugeordnet ist, die für einen der Zähler repräsentativ ist, der den LPWAN-Frame direkt empfangen hat, ausgewählt von der Zwischenvorrichtung gemäß einem vorbestimmten Kriterium.

3. Verfahren nach Anspruch 2, **dadurch gekennzeichnet, dass** das vorbestimmte Kriterium darin besteht, die erste Kopie des empfangenen LPWAN-Frames oder zufällig eine Kopie des LPWAN-Frames oder eine Kopie des LPWAN-Frames, der von einem Zähler des zweiten Netzwerks mit der besten Qualität empfangen wurde, auszuwählen.

4. Verfahren nach Anspruch 2 oder 3, **dadurch gekennzeichnet, dass**, wenn nach der Übertragung eines LPWAN-Frames an den Server, wobei der LPWAN-Frame direkt von einer Vielzahl von Zählern empfangen wurde, die Zwischenvorrichtung (130) einen für das Endgerät bestimmten Antwortframe vom Server (150) empfängt, wobei der Server in den Antwortframe eine Kennung eines vom Server (150) ausgewählten Zählers eingefügt hat, um den Antwortframe zum Endgerät (160A) weiterzuleiten, wobei das Verfahren enthält:
- Bestimmen des Zählers der Vielzahl von Zählern, der den LPWAN-Frame mit der besten Qualität empfangen hat; und
- Einfügen einer Kennung des bestimmten Zählers in den Antwortframe anstelle der vom Server eingefügten Kennung.

5. Verfahren nach Anspruch 2, 3 oder 4, **dadurch gekennzeichnet, dass** jeder in einem zweiten Frame enthaltene LPWAN-Frame im Format JSON eingekapselt ist.

6. Computerprogramm, **dadurch gekennzeichnet, dass** es Anweisungen enthält, um das Verfahren nach einem der Ansprüche 2 bis 5 durch eine Vorrichtung durchzuführen, wenn das Programm von einem Prozessor der Vorrichtung (130) ausgeführt wird und wenn die Vorrichtung (130) im System nach Anspruch 1 enthalten ist.

7. Speichereinrichtungen, **dadurch gekennzeichnet, dass** sie ein Computerprogramm speichern, das Anweisungen enthält, um das Verfahren nach einem der Ansprüche 2 bis 5 durch eine Vorrichtung durchzuführen, wenn das Programm von einem Prozessor der Vorrichtung ausgeführt wird und wenn die Vorrichtung im System nach Anspruch 1 enthalten ist.

## Claims

1. Communication system comprising an LPWAN endpoint (160A) and a server (150), said endpoint (160A) being adapted for exchanging LPWAN frames with at least one gateway (120B, 120C), referred to as an LPWAN gateway, by means of a first wireless network of the LPWAN low power long range type, and the server (150) being adapted for exchanging LPWAN frames with LPWAN gateways, each frame exchanged between the endpoint (160A) and the server (150) having to pass through an electricity meter among a plurality of electricity meters (120A, 120B, 120C, 120D, 120E) and a data concentrator (110) included in a second powerline communication network (101) of a system for the automatic management of readings from a plurality of electricity meters (120A, 120B, 120C, 120D, 120E), referred to as meters, said meters in the plurality of meters being attached to at least one data concentrator (110) via the second network (101), at least one meter in the plurality implementing an LPWAN gateway and comprising a communication interface (114) enabling it to exchange LPWAN frames with said endpoint (160A) by means of the first network (101), the system being **characterised in that** it furthermore comprises a frame transmission device (130), connected to said data concentrator (110) by means of a third network (103) and to said server (150) by means of a fourth network (102), configured so that each LPWAN frame exchanged between the device (130) and the server (150) is encapsulated in a second frame in accordance with a frame format that the server (150) would exchange with an LPWAN gateway, and so that, when an LPWAN frame sent by the endpoint (160A) and received directly by a plurality of said meters and by a plurality of said data concentrators in the second network so that the device (130) receives a plurality of copies of the LPWAN frame, the device (130) transmits a single copy of said LPWAN frame to the server (150), said LPWAN frame being associated, in the second frame that encapsulates it, with information representing one of the meters that directly received the LPWAN frame, selected by the device (130) in accordance with a predetermined criterion.

2. Method for exchanging first frames, referred to as LPWAN frames, between an endpoint (160A) and a server (150), said endpoint being adapted for exchanging LPWAN frames with at least one gateway, referred to as an LPWAN gateway, by means of a first low power long range wireless network, and the server being adapted for exchanging LPWAN frames with LPWAN gateways, each LPWAN frame exchanged between the endpoint and the server having to pass through at least one meter and a data concentrator connected together by a second powerline communication network and forming a system for the automatic management of readings from a plurality of electricity meters, at least one meter implements an LPWAN gateway and comprises a communication interface (114) enabling it to exchange LPWAN frames with said endpoint by means of the first network, the method being executed by an intermediate device (130) connected to each data concentrator (110) by means of a third network (103) and to the server (150) by means of a fourth network (102) so that each LPWAN frame exchanged between said terminal (160A) and the server (150) passes through the intermediate device (130), the method being **characterised in that** each LPWAN frame exchanged between the intermediate device (130) and the server (150) is encapsulated in a second frame in accordance with a frame format that the server would exchange with an LPWAN gateway, and a **in that** it comprises:
- receiving a plurality of copies of one and the same LPWAN frame sent by the endpoint (160A) from a plurality of data concentrators (110), the LPWAN frame having been received directly by a plurality of meters; and
- transmitting a single copy of the LPWAN frame to the server (150), said LPWAN frame being associated in the second frame with information representing one of the meters that directly received the LPWAN frame, selected by the intermediate device in accordance with a predetermined criterion.

3. Method according to claim 2, **characterised in that** the predetermined criterion consists of selecting the first copy of the LPWAN frame received or randomly a copy of the LPWAN frame or a copy of the LPWAN frame received with the best quality by a meter in the second network.

4. Method according to claim 2 or 3, **characterised in that**, when, following the transmission of an LPWAN frame to the server, the LPWAN frame having been received directly by a plurality of meters, the intermediate device (130) receives a response frame intended for the endpoint from the server (150), the server having inserted in the response frame an identifier of a meter selected by the server (150) for relaying said response frame to the endpoint (160A), the method comprising:
- determining the meter in the plurality of meters that received the LPWAN frame with the best quality; and
- inserting an identifier of the meter determined in the response frame in place of the identifier inserted by the server.

5. Method according to claim 2, 3 or 4, **characterised in that** each LPWAN frame included in a second frame is encapsulated to the JSON format.

6. Computer program, **characterised in that** it comprises instructions for implementing, by a device, the method according to one of claims 2 to 5 when said program is executed by a processor of said device (130) and when said device (130) is included in the system according to claim 1.

7. Storage means, **characterised in that** they store a computer program comprising instructions for implementing, by a device, the method according to one of claims 2 to 5 when said program is executed by a processor of said device and when said device is included in the system according to claim 1.
